# EUROPEAN PATENT APPLICATION

(11) **EP 1 610 276 A1**
(43) Date of publication of application: **28.12.2005**
(21) Application number: 05253915.2
(22) Date of filing: 23.06.2005
(51) Int. Cl.: G07F 19/00

(54) **System and method for coordinating payment identification systems**

(30) Priority: 25.06.2004 US 877276
(71) Applicant: Vayusa, Inc., Newton, MA 02458 (US)
(72) Inventor: Bam, Ajay R., Watertown, MA 02472 (US); Wesley, Robert J., Wellesley, MA 02482 (US); Stock, Walter, Newton, MA 02465 (US); Chen, Troy, Teaneck, NJ 07666 (US)
(74) Representative: Jackson, Richard Eric

(57) **Abstract**

Disclosed are systems and methods for completing a purchase when the customer is not at the point of sale. According to an embodiment, there is established a communication connection for the customer to transmit an identifier uniquely associated with the customer to a merchant when placing an order for merchandise. The unique identifier along with data pertaining to the order for merchandise is communicated to a control system. The control system then obtains acceptance for making the purchase from the user that is associated with the unique identifier.

## Description

### CROSS-REFERENCE TO RELATED APPLICATIONS

The present invention is a continuation-in-part of United States patent application serial number 10/646,579, filed August 22, 2003, entitled "SYSTEM AND METHOD OF INTEGRATING LOYALTY/REWARD PROGRAMS WITH PAYMENT IDENTIFICATION SYSTEMS," which claims the benefit of priority to United States provisional patent application serial number 60/420,643 filed October 23, 2002, entitled "A PAYMENT SYSTEM INTEGRATING LOYALTY/REWARD PROGRAMS" to which priority is hereby claimed and which are hereby incorporated by reference herein. The present application also is related to United States patent application serial number 10/691,459, filed October 22, 2003, entitled "SYSTEM AND METHOD OF GENERATING, DISTRIBUTING, AND/OR REDEEMING PROMOTIONAL OFFERS USING ELECTRONIC DEVICES," the disclosure of which is hereby incorporated herein by reference.

### TECHNICAL FIELD

This invention relates to point of sale (POS) identity systems and more particularly to systems and methods for allowing payment identity verification for goods or services.

### BACKGROUND OF THE INVENTION

As societies have become more and more mobile, people have found it convenient, and usually mandatory, to carry on their person several items of critical importance. One of these items is a form of payment for goods and services and another of these items is a form of identity.

Before the concept of government-sponsored currency came into vogue, people carried with them different forms of valuable commodities, such as gold, silver, or diamonds. In some societies, even beads were popular. With the advent of currency, coins, usually with a ruler's picture imprinted on one surface, were lugged around in sacks or purses. In every transaction, the seller of goods or services needed to make sure of the authenticity of the payment. Usually this was based on verification of the validity of the payment by weighing or measuring, and often depended heavily upon the identification (and known or provable veracity) of the buyer.

Paper money issued by a reliable government solved many of the problems traditionally inherent with commercial transactions. Using such money, the identity of the payor is not critical so long as the authenticity of the currency is validated. For the past few decades this has again been changing, as credit cards, debit cards, stored value cards, and other forms of non-cash payment have taken hold. Concurrent with a change in payment method, there has come an increase in the need for personal identification, both for the payment of goods and services and for the purpose of identification for other purposes. These other purposes include verification of group membership, such as entitlement to discounts, admission to museums, medical benefit entitlements, proof of car insurance, proof of valid licenses, and the like.

Thus the purse, or now more commonly the wallet, which at first served to lug around valuable and often heavy objects for bartering, now carries several forms of personal papers, usually in the form of plastic cards bearing magnetic identification strips. The wallet now carries different pieces of information and service provider information, such as identification cards, payment cards, loyalty cards, affinity cards, drivers licenses, coupons, and more. Key chains also are being used to carry tags containing these pieces of information.

Each of these cards enables specific services. For example, a credit card serves the function of providing the user credit for a purchase but does not serve the function of allowing the card to be used for debit purposes, for group identification, or for indicating that the holder has a valid license or insurance. Moreover, the information that is stored on these cards is permanent and cannot be changed at the will of either the issuer or the borrower. The wallet again has grown heavier as the number of identification cards has increased.

Compounding the problem, electronic devices, such as cellphones, PDAs, laptops, and the like, are now being carried by individuals, adding even further to the burden. The biggest drawback of a wallet is that the cards inside can be stolen and damaged by wear and tear. Thus, security of the cards is a big issue. Once stolen, the information printed on the cards can be used in a fraudulent manner or the information residing on the magnetic strip can be easily read and/or copied using a card reader. It takes time and cost (not to mention stress on the recipient) to re-acquire lost or stolen cards. Sometimes this information is fraudulently copied without the card owner even being aware, resulting in losses to the card holder, the merchant, and/or the card issuer. While the lost or stolen card is being replaced, customers (and vendors) have lost opportunity costs of not being able to use the card. The cost of card replacement includes processing and mailing costs, and is thus not trivial.

Many stores also have their own affinity, loyalty or rewards programs, such as a *Stop & Shop* card, a *CVS* pharmacy card or a *AAA* card, which are programs operationally separate from the payment cards. This offers the additional inconvenience of needing to carry additional cards and swipe two different cards at a point of sale; one card for discount/rewards/identification, one card for payment, and perhaps a third card just to enter the facility. Other stores have started to issue stored value cards for purchases, gifts, promotions, and returns. One use of such stored value cards occurs when a merchant records one or more transactions on a customer's card and then, after a certain number of transactions (or transaction amounts) have been entered, the customer is awarded a gift, a discount, or some other item of value. In many respects, these cards are being used to build customer loyalty and attract new customers.

Any use of physical cards requires an infrastructure to support its handling and processing. For example, most stores have a hardware device(s) that reads cards, such as debit, credit or loyalty cards, and promotional coupons. These devices are commonly known as card readers (magnetic stripe readers, smart card readers, bar code readers, etc.) and each such reader requires software to manage it. One disadvantage of these systems is that they often require proprietary hardware. In all such systems there are ongoing system costs to keep the readers, the software and the back-office support up and running. Upgrade costs are also necessary from time to time. Often, a POS must have card readers and the supporting software/hardware from several suppliers. One drawback to such a system is that new card providers cannot easily enter a market unless the new card company already uses the established networks and the card reading associated therewith.

There has recently been a rise in the use of mobile phones and mobile devices as tools for commerce, communication, content and collaboration. These devices may include mobile phones, pagers, radios, PDAs, electronic diaries and watches. As the use of such electronic devices has grown, interest has developed in finding a way to conduct transactions using these electronic devices. Smart cards were introduced in the 1970s with the intention of serving as programmable devices to secure and carry encrypted data, but smart cards have seen only minimal success.

### BRIEF SUMMARY OF THE INVENTION

The present invention is directed to a system and method for coordinating a transaction by entering information pertaining to the transaction at a POS, the entered information being independent of identification of a recipient of the transaction. Independent from the entering of the transaction information there is established a communication connection from a device uniquely associated with the recipient to a location remote from the POS. The POS location may be identified via the established communication connection, and the remote location may coordinate the identified POS location with the entered information for the purpose of authorizing the transaction at the POS. In one embodiment, any auxiliary entitlements, such as loyalty memberships and marketing promotions, are identified and any available discounts, premiums, or other extras are applied to the information entered at the POS. The remote location authorizes payment of the transaction amount from third parties in a further embodiment.

In another embodiment, there is shown a system and method which uses a payment system or a payment platform comprising a communication device that will connect through a network connection into a server or portal on which is stored the customer's information and the merchant's information. The portal is preferably integrated both with existing clearing houses to clear electronic fund transfer transactions and with a loyalty/rewards and marketing promotions management system. In operation, the system of embodiments handles payment transactions at the point of sale (POS) and also handles the loyalty/rewards/promotions portion of the transaction. In one operation, the user receives the benefit of specials or other promotions that are all managed from the server. Other operations may query the user of the communication device to input information which impacts the purchase transaction, such as gratuities, product/service selection/payment cards, loyalty programs, etc.

In another embodiment, there is shown a system and method for completing a purchase when a customer is remote from the merchant. A customer communicates a unique identification to a merchant while placing an order for merchandise. The unique identification and information about the merchandise to be purchased are communicated by either the merchant or the customer to a control system. The merchant and the customer may be in contact with the control system simultaneously. In operation, the control system obtains acceptance for the purchase of the merchandise from the customer over a temporarily established connection. This application may be used in any transaction where a merchant and a buyer are not dealing face-to-face. For example, embodiments are particularly well-suited for use with respect to paying for delivery of food, such as pizza, where an order is placed remotely and the requested food is delivered to the customer at a later time.

In yet another embodiment, there is shown a system and method in which a customer pre-authorizes payment for a purchase. The customer selects a location identifier associated with where the purchase is to be made and transmits the location identifier to a control system. The control system requests authorization for a purchase from the customer in advance of the purchase. An example of this application would be pre-paying for a meal at a restaurant. Another example might be pre-paying for a movie ticket.

In another embodiment there is shown a system and method which uses a payment system, or a payment platform, comprising a communication device or a combination of communication devices that will dial or connect through various networks into a portal on which is stored the customer's information and the merchant's information. The server or portal is integrated with one or more existing clearing houses to clear electronic fund transfer transactions. In further embodiment, the server or portal may be integrated with loyalty/rewards and marketing promotions management system and possibly connect with other customer information systems (i.e., driver's license, medical records, insurance data, or membership organizations). In operation, the system transmits payment information to the POS based upon the operator's input on the communication device. The POS in this case could be at the store or some virtual location. Examples of this application include ordering and paying at a restaurant, paying for parking, ordering and paying for tickets at an entertainment location, and sending identification information to a known POS.

In another embodiment of the system, the enrollment of payment information includes the mobile device dialing into a designated phone number which will read the information from the mobile device and allow the customer to enter additional information required. Another embodiment allows the user to enter information at the merchant's POS, and the POS automatically links that information to the customer.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 is an overview of one embodiment of a payment/loyalty architecture;

FIGURE 2 describes an embodiment showing a payment scenario in accordance with FIGURE 1;

FIGURE 3 is a flow chart showing one embodiment of the scenario of FIGURE 2;

FIGURE 4 is a flow chart showing one embodiment of enrolling a person for a mobile account by sending that person a mobile gift;

FIGURE 5 is a flow chart showing one embodiment of enrolling a person for a mobile account from a merchant's location;

FIGURE 6 shows another embodiment of the scenario of FIGURE 2;

FIGURE 7 is a flow chart showing an embodiment of a remote payment scenario; and

FIGURE 8 is a flow chart showing another embodiment of a remote payment scenario.

### DETAILED DESCRIPTION OF THE INVENTION

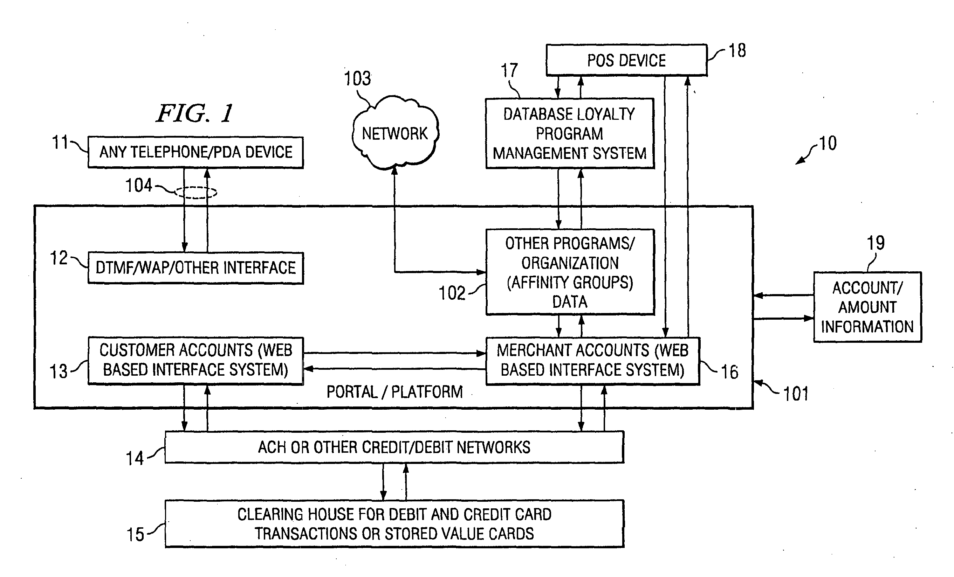

Payment system 10, shown in FIGURE 1, offers consolidation, convenience and management of all of a user's cards at one place through a website and further enables the use of these electronic/physical cards as well as coupons and other promotional information at a physical or virtual location using a phone or other communication device. The customer's communication device, such as phone 11, may be wired or wireless and may operate through dial up or via a data network such as a GPRS and/or WIFI network. While a telephone is shown, the communication devices useful according to embodiments of the invention include a PDA, computer, pager, or any other communication device capable of receiving and transmitting data in accordance with embodiments as described herein. A person may register his/her new or existing payment and loyalty cards/accounts, such as checking or savings accounts, debit, credit or loyalty cards with the portal at any POS or by contacting the portal via his/her communication device. Once the user connects with the portal, the user selects which card (or cards) stored on the system he/she desires to use, which loyalty programs he/she is eligible for, and/or which stored value cards the user desires to link to his/her mobile payment account. The loyalty programs and stored value cards may be linked with an individual merchant or may be universally used, depending on the program or value card. For example, loyalty programs or discount cards may be stored that are accepted in one store but not in another.

Assuming a merchant (enterprise) has enabled system 10 to handle payments (or identification), any of that merchant's POS locations 18 can be used by a prospective recipient of goods/services. In one embodiment, the merchant can go online and sign up and also each recipient, or prospective recipient, can go online (or otherwise) to sign up. In doing so, the merchant enters data about his/her business and then enters data about the methods of payment that the he/she will accept, the loyalty cards that are valid to use in purchases from the merchant, and any coupons or special discounts the merchant may offer to recipients that use system 10 to handle payments. The recipient, when signing up, will enter personal information, such as street address, phone numbers, e-mail addresses, or other means for the system to communicate with the recipient. The recipient enters information about the methods of payment that he/she desires to link to system 10, and then the recipient may enter information about loyalty cards and other discounts that he/she is eligible for along with information about stored value cards. The recipient's specific data will be stored in a secure form on customer accounts system 13, and the merchant's specific data will be stored on merchant accounts system 16. In another embodiment, only sensitive recipient and merchant data is stored in a secured form on the respective system 13, 16. If the recipient or merchant desires to change data that has been entered, he/she may make these changes at any time by connecting to the system 10. Then, as will be seen, when a user uses the system, if that user is enrolled in a loyalty program, then preferred embodiments arrange for the appropriate discounts before charging the user.

A benefit of system 10 to the issuer of the cards/merchants/banks is quick and electronic access to the customer and better customer relationship management, including more effective and personalized communication, tracking of customer behavior, and tracking of customer needs. Also, the system facilitates the use of payment cards and loyalty programs within minutes after being issued. Fraud is further reduced in the entire system as compared to the traditional credit card charges since there is no piece of paper giving away the credit card number. Further, the customer never has to share his/her credit card or credit card number with the merchant, and this eliminates the possibility of a merchant or bystander misappropriating the credit card information or reproducing the credit card. This could translate into reduction in transaction fees for payments, such as credit, debit or ACH. Additionally, logging of transactions/receipts in a web portal or email system saves paper and printing costs to retailers.

To the end consumer (recipient), the system offers convenience, consolidation of cards, management of expense at the point of sale, availability of cards in electronic form, easy sign-up for new cards, digital receipt management, a web interface and consolidation of reward programs. The system allows a consumer to complete a payment transaction using existing payments methods such as checking, Account Clearing House (ACH) services used mainly for electronic fund transfer through direct deposits or direct payments, debit and/or credit cards. In addition, the system allows the consumer to use all of his or her cards/accounts in electronic form at a point of sale location using a telephone (wired or wireless) for payments, loyalty programs and for identity, and will allow for the integration of different cards/programs.

Continuing in FIGURE 1, system 10 controls the operational aspects of the concepts discussed. The user may use any communication device 11, such as a telephone, PDA, etc., to communicate with portal/platform 101. Note that the communication can be wireline or wireless and in the embodiment shown may be based on the well-known dual tone multi-frequency (DTMF) standard. Additionally or alternatively, DTMF may be enhanced or replaced by a wireless application protocol (WAP) client, Bluetooth technology, voice recognition or any other technology for enabling the transactions to occur. Initially, interface unit 12 will use a telephony application program interface (TA-PI) which will allow platform 101 to detect the DTMF digits. Platform 101 can be a single portal or multiple portals, either on a single server or on multiple servers. This server(s) can be any processor-based system having access to application programs for control purposes, database(s) for storage and one or more communication networks 103, 104.

Platform 101 may use one or more types of security levels to identify a consumer, such as equipment ID (e.g., electronic serial number, mobile identification number, etc.), caller ID, a unique PIN, and/or other types of encryption and authentication methods. If the user were using a wireless telephone, standards in the United States associate one telephone number with one mobile phone, thereby allowing customer accounts system 13 to properly identify the calling user. If the user is calling from a wire-line telephone, caller ID could be used to identify the caller. In the future, other secure ID methods, such as biometrics, voice recognition or other secure methods may be used under control of interface 12 or an added security module.

Retailer database 17 controls transactions and loyalty program platforms unique to particular enterprise, according to embodiments uses open architecture platforms, such as XML or similar technologies along with one of the many currently available API's (Application Program Interfaces), so that the platform can communicate to any POS device 18 used by an enterprise. Platform 101 provides customer accounts system 13 for use by recipient end-users (customers of a merchant) to manage accounts of end-users and merchant accounts system 16 where merchants can assess and manage their accounts. Systems 13 and 16 could be web based, if desired, for easier management by end-users and/or merchants.

Platform 101 may incorporate security technologies, such as PKI (public key infrastructure) software for encryption and user certificates. PKI enables users to securely and privately exchange data, including data representing money, through the use of a public and a private cryptographic key pair that is obtained and shared through a trusted authority. PKI is the preferred approach for digital security, but any transaction protocol that will ensure data is securely transferred can be used.

Transactions incoming to platform 101 will filter through network 14 to check ACH, ATM, debit or credit cards, and may filter through network 15 to check other transaction clearing houses, such as affinity groups, stored value cards, etc. Depending on the type of transaction, the payment data will be routed to the appropriate processing entities. An ACH is a secure electronic fund transfer system that connects all U.S. financial institutions and acts as the central clearing facility for all Electronic Fund Transfer (EFT) transactions that occur nationwide. ATM/debit and credit card transactions will be sent to the appropriate banks, or clearing agency, for approval and clearing. These will be done through different ATM/debit or credit networks, such as Cirrus, NYCE, Maestro, Visanet, etc.

The customer, standing in proximity to the POS terminal or in contact with the platform when in a location remote from a merchant, as will be discussed, preferably decides on which form and which third party payment he/she desires to use for the particular transaction. Alternatively, the customer has specified a particular form of payment to use for particular transactions. For example, a customer may elect to use his/her credit card for clothing purchases and then use his/her debit card for grocery purchases. Platform 101, in cooperation with account information database 19, and networks 14 and 15, all together acting as a server, then controls the transaction to satisfy the merchant that the merchant will be paid for the goods and services, less any discount applicable. Note that a user may decide to have a part of the transaction on one credit card and a part on a second (or third) credit card or a debit card or on a stored value account. However, the merchant need not be apprised of the customer taking advantage of this feature, and the merchant will preferably be provided a single transaction confirmation for the transaction.

Platform 101 communicates with merchant transaction database (part of merchant accounts system 16) and with loyalty program management system 17. This may be accomplished through an API (Application Program Interface) that communicates with all the necessary databases and with POS device 18. This design allows for a software-only integration. A key (keyboard or touch screen or similar) (not shown) at POS system 18 may be designated for different transactions, such as returns and/or identification.

Platform 101 allows a consumer at either a retail POS location, such as associated with POS system 18, or at a location remote from the merchant, to access his/her individual checking (ACH)/debit/credit/loyalty/stored value account(s) through his/her communication device and make a payment. During the process, the consumer also may automatically access loyalty programs, such as those stored in system 17 or otherwise associated with the location at which that consumer is located. For example, the loyalty programs may be associated with a location identifier that a consumer or merchant has entered when the consumer desires to make a purchase at a location that is remote from the merchant. The consumer will receive any eligible discounts. These discounts can be provided by the merchant, the manufacturer of goods or services, the company running platform 101, the bank or credit/debit company, or via a membership organization as controlled by database 102 and network 103 to which that the purchaser belongs. These affinity programs can be stored in separate databases, or in a common database and can be local to platform 101 or remote therefrom.

One example of such use would be with loyalty systems, such as when a customer shops at a store and for each dollar spent, the customer earns credit for a purchase of a product at another location. Thus, if a customer were to buy twenty dollars worth of groceries, the customer would receive a two cents per gallon discount on gasoline bought from a gas pump located outside the grocery store. The system would keep track of such grocery purchases and then automatically discounts the gasoline purchase. Note that this can work in the opposite direction, such that the customer can buy the gasoline before shopping for groceries and then when the customer goes to the POS for the groceries and pays via the system described herein, the prior gasoline purchase would be credited with the now available discount. Also, a person might be entitled to a discount at many locations depending upon that person's membership in an organization, such as, for example, the AARP or AAA. Thus, if a person were entitled to a 10% discount at certain parking facilities, that discount would be applied under control of the system without the person even requesting it.

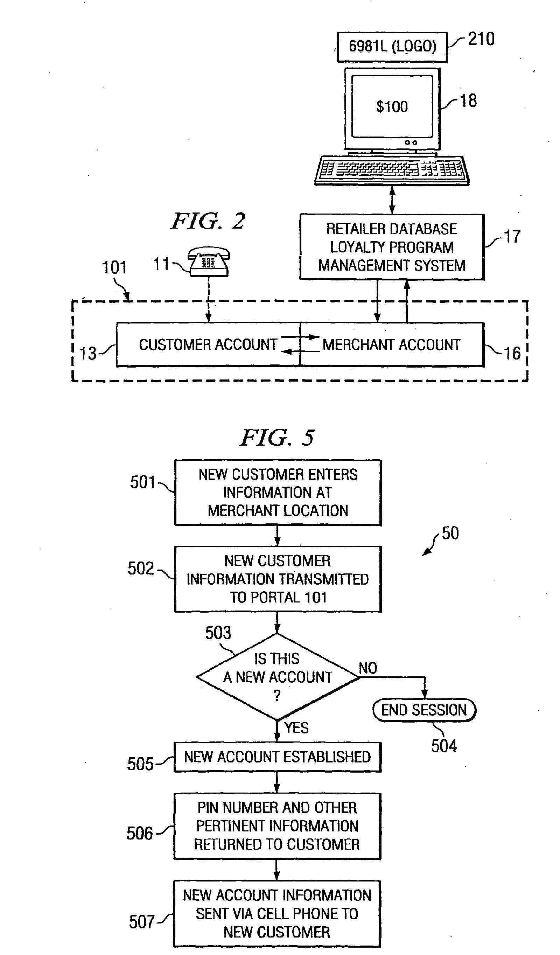

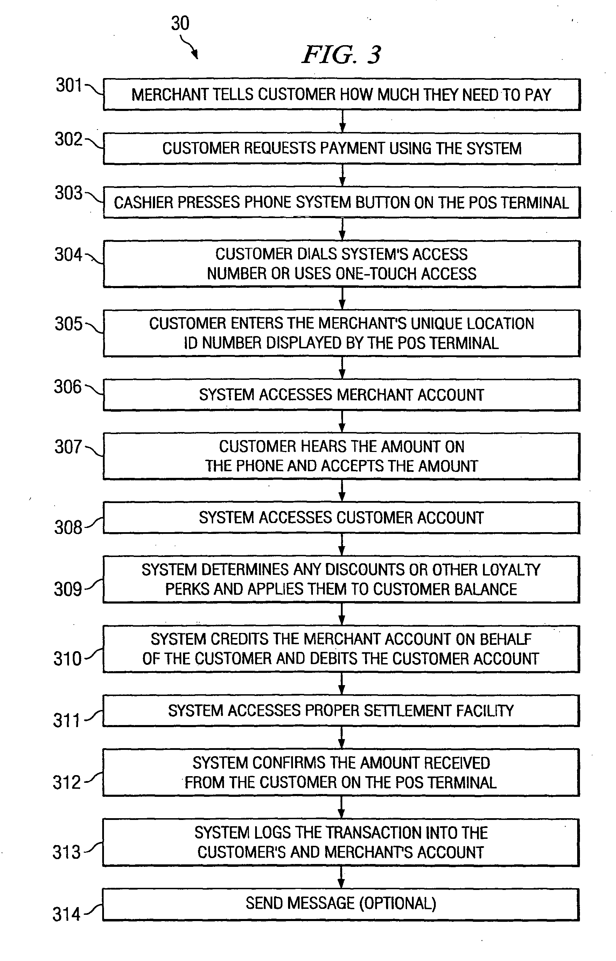

In operation according to embodiments, as shown in FIGURES 2 and 3, the consumer approaches POS system 18 at a merchant whose point of sale is enabled to work with platform 101, or a similar platform. In the case of license verification, the inquiring person would approach the person to be verified. The clerk (or inquiring person) rings the consumer's merchandise into the POS system as in any other transaction and then will ask (process 301, FIGURE 2) the consumer whether he/she would like to pay via "Cash, Charge, or Phone System." The consumer who has already signed up for a phone system account, answers "phone system" (process 302). At this point the clerk presses the phone system payment key on the POS terminal (process 303), and waits for confirmation. The clerk could, instead of pushing a key on the register, otherwise actuate a connection from the POS to portal 101, FIGURE 1.

In the case of an identity check, the requesting person enters the information desired to be verified into the system under the control of the inquiring person.

While the clerk is ringing up the order (or the requester is entering the data), the consumer dials (or speed dials) the phone system server or connects to a web page which is part of interface 12 (FIGURE 1) (process 304, FIGURE 3). The consumer then enters a unique POS identification number that is displayed, with the phone system logo, if desired, on the cash register (process 305, FIGURE 3 and element 210, FIGURE 2). This POS location number can be displayed on the terminal, displayed on a sign posted at the POS location, printed on a POS tape or restaurant tab, or it can be an officer's badge number, a number printed on a vendor's hat or shirt, or any other unique number associated with the POS, such as a parking meter or vending machine number. Another option allows the location number to be integrated into a unique phone number for that particular merchant. In that case, the consumer only needs to dial the unique telephone number of the POS to interface with the merchant POS. In another embodiment, the telephone number of the POS may be transmitted to the consumer's phone by a data up link, to avoid the need for the consumer to dial the telephone number of the POS.

The consumer then hears (or views) through his/her communication device a request for payment (or verification) from the merchant's system together with the original amount and any appropriate rewards/discounts that pertain to that consumer. This is controlled via processes 306, 307, 308, 309. For certain applications, the consumer may be requested to add data, such as a gratuity, or the consumer may select a different payment and/or loyalty option. The consumer may select which form of payment (which third party payor, Visa™, MasterCard™, etc.) he/she desires for this transaction. Note that the consumer may want part of the payment charged to one account and part to another account. Alternatively, the consumer's communication device may be associated with a particular form of payment. For example, if a consumer's communication device is a cellular phone, the phone may be associated with a particular credit card, such that when the consumer connects with the system, the system matches the consumer with a form of payment, such that the phone acts as a payment token. Regardless which method of payment the consumer is using, the consumer then verifies the payment by entering his/her personal identification number (PIN), if desired, or press a key (e.g., 1 or #) to indicate approval. The PIN, if used, could be sent using DTMF or other signals or the PIN may be generated by biometrics (finger print, voice print, etc.). Note that the need to enter the PIN or approving the transaction by entering a key may be optional and may vary depending on the dollar amount or type of merchant, etc. Approval may simply happen by dialing the POS terminal and entering the location number. Interface 12 controls the provision of voice or data (or both) to the consumer's phone using, for example, interactive voice response equipment, or the like.

Note that the steps of dialing and entering the location ID may be merged. Such merger would result in a unique telephone number being posted on the POS terminal that a consumer might dial to indicate the function of payment and location. Thus, dialing a unique telephone number on the consumer's device allows the system to recognize the location where the payment is to be sent and also serves as a number to connect to platform 101. Note also that the merchant need not ever be made aware of which form of payment that the consumer has chosen to use, thereby further reducing opportunities for fraud and bad behavior.

After the consumer has verified payment, the system, using links to the national clearing houses 14, arranges for payment 310, 311 and the clerk receives visual notification 312 through the POS system that the payment has been made. When identity is at issue, a picture of the consumer could be sent to the requester, either via the requester's system or most likely, via a display on the requester's terminal. At the entrance to a sporting event or theatre, a copy of the ticket could be displayed on the consumer's screen. A receipt of the transaction can be sent to the consumer's e-mail address or a SMS message can be sent to the consumer's cell phone, verifying the transaction, under control of customer accounts system 13.

It is, of course, possible to combine processes 304 and 305 (and perhaps other processes as well). This could be accomplished, for example, by posting a unique telephone number, web address or other electronic address on the POS terminal. The consumer could dial that number to indicate acceptance of payment information coming from that location. Thus, dialing a unique telephone number would allow the system to recognize the location where the payment is to be sent and would also serve as a number to connect to the telephone payment system and for coordinating all programs for the user.

It should be noted that while a commercial transaction, as discussed in the embodiment described herein, is initiated by a clerk at a traditional POS cash register, the concepts of the invention are not so limited. For example, the customer may perform self-checkout (by scanning the bar codes on his/her purchases, or otherwise) or the customer may be using a card (or license) for self-identity or entitlement purposes without actually purchasing merchandise. Such identity could be, for example, verifying the physical identity of the person, or showing that the person has a valid license (such as, for example, a driver's license, a fishing or hunting license, a pilot's license, or the like) or a valid insurance card (vehicle, medical, or otherwise), or identifying the person as holding an entitlement card (such as a zoo membership or an alcoholic beverage consumption permit), or showing that the person is entitled to admission to an event (such as a movie, sporting event, or the like). The person may elect to send funds, admission evidence, and/or loyalty points in a commercial or non-commercial transaction to another person utilizing the same platform. Such transfer would be passed to the other person's account via SMS and/or IVR and it is possible to transfer to a website using email. In some situations, the transferred information could be sent to the other person's mobile device (such as a cell phone).

In each of these situations, the recipient of the commercial transaction need only become in communication contact with a proper central control point using a temporarily established connection and enter the specific location identity where the transaction is occurring, via that temporary connection. The person in charge at that location (user, gate attendant, waiter, police officer, medical personnel) who is using his/her own established communication connection then would be notified that the person who placed the connection is authorized to proceed with whatever commercial transaction is occurring. The notification to the person in charge can be via the recipient's communication device, but most likely will be by a separate communication directly to the person in charge or to a terminal in proximity to such person in charge.

Also note that the term commercial transaction is not limited to situations where money changes hands but extends to all situations where a recipient (or prospective recipient) of services or goods of any nature is involved, or where the purpose is to identify the recipient, either as to physical identity or as to entitlement for a specific purpose. Thus, the term POS is used herein to mean any location where any such identification and/or authorization is granted.

The identity of the POS terminal could be a badge number of the person requiring the verification of identity, or it could be the gate number of an arena to which the person desires entry, or a cell phone number, or an identification number of a gasoline pump, or it could be any other information uniquely identifying the location or identity of the person (for example, a unique number or code printed on a receipt) requiring identity verification and/or payment. In some situations, GPS coordinates would work, and in other situations the latitude/longitude of the location, or street corner crossing, or mileposts along a highway, would also suffice. All that is needed is a unique correlation between the source of the inquiry and the location of the user so that the system can correlate the two for verification purposes. This then allows information coming from a merchant (or other person requiring identity verification) to be validated over a separate connection originating from the person being verified. Under this system, the merchant does not gain access to the customer's payment account number (credit card number), thereby further securing such number.

As used in the specification and claims, a POS device need only be capable of confirming that a financial transaction has occurred. It can be a credit card terminal like those manufactured by Verifone® or Hypercom®, or a standard retail POS, such as those manufactured by IBM, NCR, etc., or a PC, vending machine or kiosk, or a handheld PDA, cell phone or electronic printer, or any other device which is capable of capturing data as described herein. A POS could be a virtual database which also could be accessed by other devices, such as a wireless handheld, or a wired PC. A POS device of embodiments must be able to receive confirmation of a transaction, but need not send or input purchase data.

A POS location may be a person, a transaction number identified on a receipt, a device, a web account, or a physical or virtual space having a unique identity assigned to an entity. The POS location has a unique identification associated with the POS.

A merchant may be a party giving or receiving payment for rendering services as in a store, or café. It may be a device such as a parking meter or vending machine, or it may be another person who is due a legal tender for a service or goods offered.

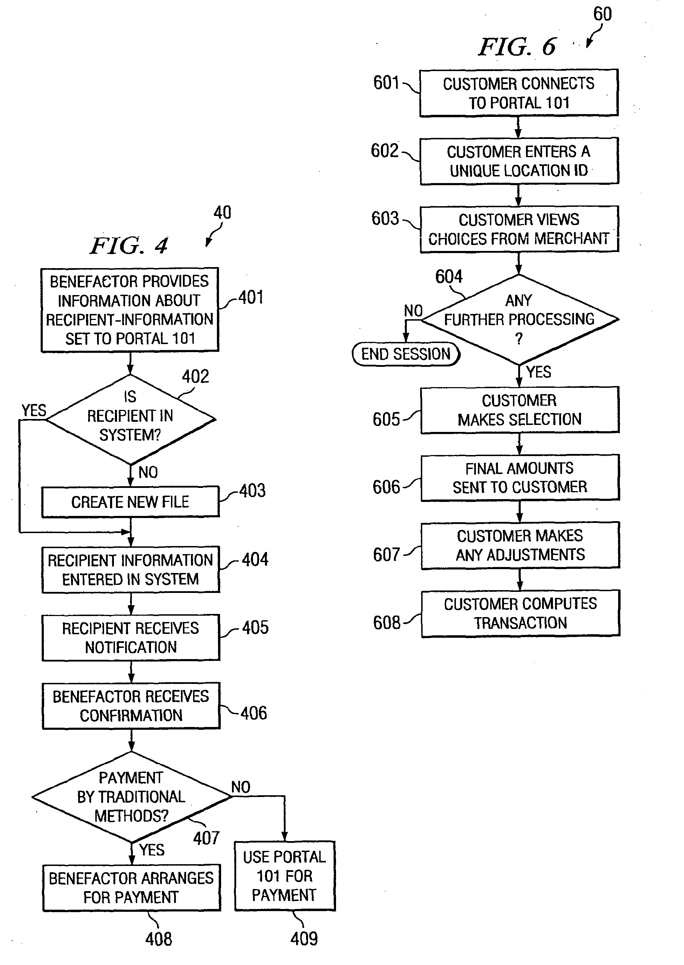

FIGURE 4 illustrates one embodiment 40 of how one person (benefactor) can enroll another person (recipient) for a mobile account by arranging for a mobile gift at a POS. In process 401, the benefactor provides the merchant with the recipient's unique identifier, such as a cell phone number, text messaging address, e-mail address, pager number, or PIN, and the amount of the gift. This can be accomplished verbally or electronically and can be done in person or via a communication link. While the embodiment discusses POS gift enrollment, the same procedure could be followed by having the benefactor log on to a web site of either the merchant or the operator of the system discussed herein. If a POS terminal is being used, then the merchant enters the received information into the POS terminal. A special greeting, such as Merry Christmas, Happy Birthday, etc. can also be added. This information is communicated to portal 101 (FIGURE 1) for processing.

Portal 101 then checks, via process 402 to see if the recipient is already registered in the system or if a new account is to be set up for the benefactor. If the recipient is not in the system, then process 403 creates a new file for the recipient and enters the information pertaining to the recipient in the proper databases via process 404. If the recipient is an existing member, then the information is entered in one or more of its databases, via process 404. Note that if the recipient already had an account, the benefactor need only provide some identification at the POS and need not actually know the cell phone number since that can be provided by portal 101.

In process 405, portal 101 sends a communication to the benefactor via the benefactor's communication device. Any special greeting, such as Happy Birthday, is then transmitted to the benefactor. At this time, the benefactor receives his/her PIN if not already known to him/her.

Process 406 controls the acknowledgement/confirmation to the benefactor indicating that the gift has been sent. This acknowledgement could be, for example, a text message, or it could be in the form of gift card that the benefactor could then print and send to the recipient.

Process 407 controls the payment of the gift card by the benefactor. If the payment is to be by traditional methods, such as cash, credit, debit or stored value card, then process 408 controls payment in the well-known manner. If the benefactor desires to use portal 101 then in process 409 the process set out in FIGURE 3 is followed.

FIGURE 5 sets out embodiment 50 illustrating the enrollment of a customer at a merchant location. In process 501, a customer who desires to be enrolled in the system can go to any POS terminal at a merchant location and enter his/her cell phone number and payment method, such as credit card(s), debit card(s), stored value card(s) and any loyalty and other affinity groups.

In process 502, this information is transmitted to the central system, such as to portal 101 (FIGURE 1) via a connection from the merchant's POS. This connection can be a dedicated connection or a temporary connection and can be wireless or wireline and may be over the telephone network or a data network.

Process 503 at portal 101 checks to see if this is indeed a new customer. This check can be made by matching cell phone or other information, such as credit/debit card information. If the information matches an existing account, then the session ends via process 504. If the information is for a new customer, then process 505 controls the establishment of a new account.

Process 506 then may provide the PIN and any other information, such as system operation information, to the new customer via the POS terminal. Additionally or alternatively, such as after a delay, this same information can be sent to the new customer's cell phone and/or to an email address provided by the new customer. The new customer also can be given access to portal 101 to view his/her account online, if desired. The message to the cell phone can be verbal and/or text and can be sent via SMS or to another communication device.

FIGURE 6 illustrates system 60 which is another embodiment of the scenario of FIGURE 2 in which a customer desires to obtain a product or service from a merchant, or desires to provide the merchant (police officer, ticket taker, etc) with identification.

In process 601, the customer connects to system 10 via portal 101 by dialing, or otherwise establishing, a temporary connection from the customer's phone or other communication device, such as a PC, PDA or the like. This connection could be WIFI, GPRS, wireline, etc. This information could be input by keypad or voice activated.

In process 602, the customer enters a unique location ID, such as a parking meter number, a vending machine number, a catalog number, a badge number, a GPS location, a cross-street, etc. In some cases this will be enough to identify the provider of the goods or services, and in some cases more information will be required. Portal 101 may ask for such additional information, which would then be provided. Some of this information could be, for example, biometric, such as the user's voiceprint (fingerprint, etc.) or the merchant's voiceprint (fingerprint, etc).

Portal 101 then, either from its own databases, or in cooperation with the merchant's databases, provides, via process 603, the customer with choices. In the case of a parking meter, the time charges may appear. If the customer had called a merchant with a catalog, pages of information, perhaps with pictures, may be provided. If the customer were trying to gain admission to a sports event, or trying to prove his/her identity to a police officer, his/her sport ticket (or driver's license) may be displayed on the customer's cell phone.

In situations where the system is being used to show identity, or membership in an organization (zoo, museum, etc) no further action is required, as determined by process 604.

In process 605, the customer makes his/her selection, and in process 606 the amount is sent to the customer. In process 607, the customer makes whatever adjustments are necessary (as discussed above with respect to FIGURE 3) and enters his/her acceptance. In process 608, the customer transaction is complete.

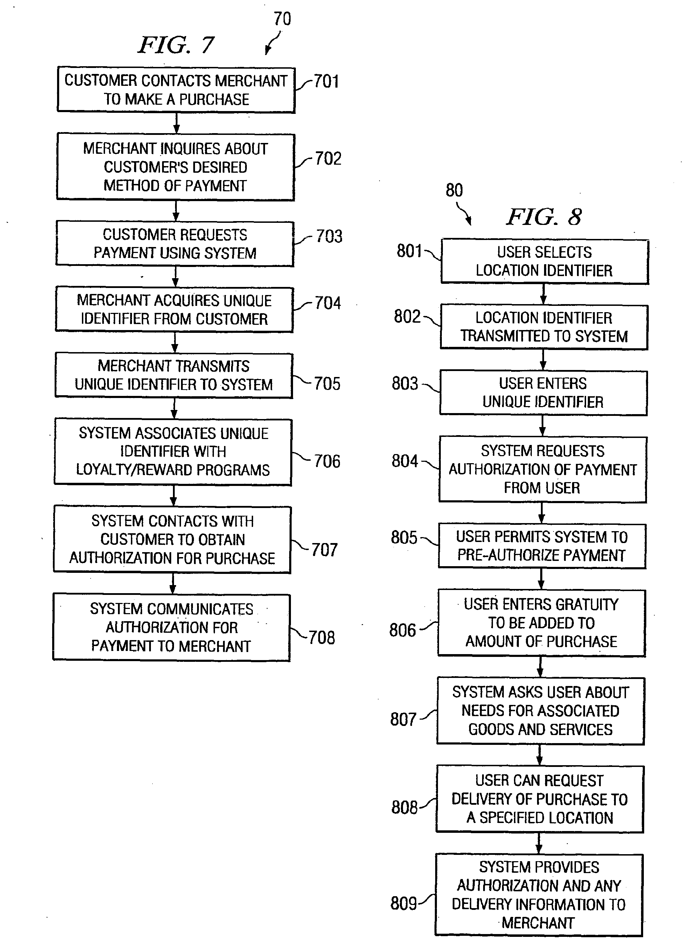

FIGURE 7 illustrates a flow chart of a situation in which a customer desires to make a purchase when he/she is remote from the merchant. In process 701, a customer contacts the merchant over a connection, such as by phone or via e-mail, to make a purchase. The connection may be temporarily established in order to make the purchase. This purchase may be, for example, to request delivery of food. In process 702, the merchant inquires about the customer's desired method of payment. In process 703, the customer requests payment using system 10. In process 704, the merchant obtains a unique identifier from the customer. This unique identifier is associated with the customer's communication device, and the unique identifier may be the customer's cellular phone number, pager number, e-mail address, text messaging address, PIN or other information that is associated with a device to contact the customer. In process 705, the merchant transmits the unique identifier along with information about the desired purchase to the system. When the control system receives the unique identifier, the system preferably associates the unique identifier with any loyalty or reward programs relevant to the purchase in process 706. As an example, if the customer is requesting pizza delivery, the control system may determine that the pizza merchant is offering a discount on certain purchases, and the control system then can associate the discount with the customer's purchase at time of payment.

In process 707, the control system, using the unique identifier, makes contact with the customer to obtain authorization for said purchase. Contact with the customer may be made through the merchant, where the merchant places the customer in contact with the control system without the customer being disconnected. Alternatively, independent communication channels may be used to obtain a unique identifier from the customer on one hand and to request authorization of payment from the customer on the other hand. These independent communication channels may be established simultaneously, in that both the merchant and the customer may be in contact with the control system at the same time. At least one of these communication channels may be a cellular phone connection. When the control system and the customer are placed in contact, the customer may specify a particular form of payment for the purchase. Alternatively, the customer's communication device may act as a payment token, in that the control system associates a particular form of payment with the communication device after the customer's communication device has been identified and/or authenticated by the control system. In process 708, the control system communicates authorization for payment to the merchant to complete the transaction. Again, this communication of authorization may occur while the customer is in communication with the control system.

In another embodiment, the customer may contact the system to authorize the purchase when the customer takes possession of his/her purchase. Returning to the food delivery example, a customer calls a merchant to order food, such a pizza. The merchant ascertains that the customer would like to pay using system 10. As in the earlier example, the merchant transmits the customer's unique identifier and information about the purchase to the system. However, the system waits for the customer to make contact with the system to authorize the purchase once the food has been delivered. The system then transmits the payment authorization to the merchant to complete the purchase. This benefits the customer who does not have to authorize payment for a purchase that he/she may not accept (i.e., the food arrives cold, the wrong food is delivered). Further, the customer can enter a gratuity that is appropriate for the type of service received. The customer can choose to add a higher gratuity for a fast delivery, or the customer can add a lower gratuity or choose to add no gratuity at all if the food arrives cold or the delivery is slow, for example.

This system also benefits the merchant who does not have deal with refunding charges that already have been assessed when the customer does not take possession of the delivery. Further, the merchant does not have to send its delivery persons out with cash to make change for a customer or a credit card machine, which can be costly for a delivery-oriented business.

In an additional embodiment, the system retains the customer's contact information, and when a delivery leaves the merchant, the system can contact the customer to alert the customer that his/her purchase is on its way. This assists the customer in tracking his/her purchase and lets the customer be certain that he/she will be home when the delivery occurs. Additionally or alternatively, the system allows the merchant to track delivery of the purchase. The merchant can view the time when the customer authorizes payment for the purchase, and this may determine the efficiency of the delivery person or generally help the merchant in identifying potential problems with deliveries ahead of time.

Further embodiments allow for the customer to interact with the system in order to make payment for goods or service provided by a merchant, without the merchant's participation in the transaction. As an example, a customer needs to repay a loan. The customer connects to the system, enters his/her unique identifier and identifies the amount due on the loan. The customer may have to confirm the amount due by entering an additional PIN. The system will arrange for the repayment amount to be transmitted to the proper party, and the system may send a receipt to that party showing that the funds were sent. Additional embodiments may provide for the party receiving the funds to confirm receipt to the customer via the system.

FIGURE 8 is a flow chart illustrating an embodiment in which a user pre-authorizes payment for a purchase. In process 801, the user selects a location identifier associated with where the purchase is to be made. The location identifier may be conveyed to the user on an advertisement, such as a billboard, a magazine, newspaper or telephone book ad, or by another means for reaching the user. As an example, a user looks at the newspaper to locate a movie that he/she would like to see. The movie advertisement may contain the POS number for the theater in which the movie is showing. The user takes this POS number and can use it to contact the system and purchase a movie ticket in advance. Alternatively, the user may contact the merchant directly to obtain this location identifier. In another embodiment, when the user enrolls in the system, a list of location identifiers associated with merchant participants may be provided to the user.

In process 802, the location identifier is transmitted to the system 10. The user may choose to transmit this information by phone, e-mail, pager, text message or by another device that can contact the system. Once the user has made a connection to the system, in process 803, he/she enters a unique identifier that is associated with the user. This unique identifier may be a cellular phone number, pager number, text messaging or e-mail address, or a pin number that is associated with a device that can contact the user. Once the system has received the location identifier and the unique identifier, the system requests authorization of payment from the user in advance of the purchase in process 804. Again, the user may be asked to specify a method of payment for the purchase by selecting from the available methods associated with the user that are stored on the system. Alternatively, the control system may associated a particular method of payment with the user's communication device when the unique identifier associated with the user has been identified. In process 805, the user permits the system to pre-authorize payment for the purchase. The amount of the purchase is generally unknown when the user permits the system to authorize payment.

In the case of pre-authorization of payment for a meal in a restaurant, the user identifies the restaurant and its appropriate location identifier and transmits this location identifier to the system. After entering his/her unique identifier, the system will obtain pre-authorization for the purchase from the user. When the user completes his/her meal at the restaurant, the waiter need only come to the table once to complete the transaction. The waiter may bring the bill to the table. The user provides a PIN or some other system identifier to the waiter, and the waiter can complete the transaction. The user does not need to wait for the waiter to bring a receipt back to the table for the user to sign. Rather, the user may receive a notification on his/her communication device associated with the system alerting the user that a charge has been made. This notification may serve as the receipt for the transaction, and the user may receive the notification before he/she ever leaves the restaurant.

Thus, the user and the merchant can save time because, in a restaurant for example, the user will not have to be interrupted more than once to deal with the bill, and the restaurant will know that the purchase has already been authorized and approved for payment.

In another embodiment, this pre-authorization system also allows the user to authorize a purchase to be made by a person other than the user. As an example, a parent may pre-authorize a purchase to be made by his/her child at a restaurant when the parent does not want to send the child out with cash or a credit card. Alternatively, an employer may want to reward his/her employee for his/her work, and this system allows the employer to pre-authorize a meal for his/her employee without the need for purchasing gift certificates or giving cash or a credit card to the employee to make the purchase.

In process 806, the user can elect to enter a gratuity to be added ahead of time to the amount of the purchase if the purchase is of a gratuity-driven service. Gratuity-driven services may include wait-service at a restaurant, salon services, housekeeping or valet services associated with a hotel stay, or other services where it is anticipated that a user might desire to pay a gratuity. The user can elect to enter gratuity as a percentage or a dollar amount. The user also can choose not to enter a gratuity, if he/she so desires.

In another embodiment, the user can wait until after the service has been provided to add a gratuity. If the service happens to be particularly poor, a user may not want to pre-enter a gratuity because he/she may elect not to leave a gratuity or may want to leave less of a gratuity than he/she had planned. However, a user may choose to add the gratuity at the time that the purchase is pre-authorized in order to save time or if a standard gratuity is to be added for a particular service. For example, some restaurants set a standard gratuity for parties over a certain size, and if the user knows that this is going to be added, then he/she can save time by adding it at the time of pre-authorization. In a further embodiment, if a gratuity has been added in advance, the user may have the option to adjust the pre-selected gratuity when the actual bill is received before providing final authorization for the purchase.

When the user pre-authorizes payment for a purchase, as in process 805, the system also may query the user about needs for associated goods and services. Associated goods and services may include maps, location information, reservations, discounts, coupons, dining services, and entertainment. For example, the user sees an advertisement for a restaurant, and the advertisement contains a location identifier associated with that restaurant. The user transmits the location identifier for the restaurant to the system and makes arrangements to pre-authorize payment for a meal at the restaurant. However, the user may be unfamiliar with the location of the restaurant and needs directions, or would like to know what entertainment options are available near the restaurant. After the user pre-authorizes payment for the meal, in process 807, the system then may ask the user about his/her needs for associated goods and services, such as location information or a map to the restaurant. The system also may notify the user that a concert or theatrical production that will be taking place near the restaurant location and offer the user the option to purchase tickets to the event or receive information about where the event is being held.

Although associated goods and services have been described with respect to maps, discounts and coupons, for example, associated goods and services also may include notification when a user's friend or family member has made a similar purchase. Returning to the concert ticket example, a user may purchase tickets to a particular concert. When the purchase has been made, the system may notify the user that his/her friend also has bought a ticket to the concert. The user may then contact his/her friend in order to make arrangements to meet for a meal on the day of the concert or to coordinate travel plans. It should be appreciated, however, that the user specifies whether his/her purchasing profile may be shared with other system users.

Additionally, in process 808, the user can request delivery of a pre-authorized purchase to a specified location. As an example, the user may place an order for food over the phone or on the Internet. The user plans to carry the food out of the restaurant and would like to have the food brought out to his/her vehicle when he/she arrives at the restaurant for pick-up. The user then can enter information about the type of car that he/she will be driving and the approximate time of pick-up, and in process 809, the system provides this information about delivery to the merchant associated with the location identifier at the time that the pre-authorization for the purchase is communicated to the merchant.

The pre-authorization of payment for a purchase may expire after a specified period of time if the purchase has not been completed. The period of time may differ depending on the type of purchase being made. If the purchase is a meal in a restaurant, the period of time may correlate to the time that the reservation is scheduled. If the purchase has not been completed within a few hours of the time that the reservation was scheduled, then the pre-authorization expires.

Although the present invention and its advantages have been described in detail, it should be understood that various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A method for making a purchase, said method comprising:
during a purchasing process and under control of a merchant, obtaining from a customer a unique identifier for a purchase, wherein said customer is not at the point of sale;
communicating said unique identifier together with data pertaining to said purchase to a control system common to a plurality of merchants and to a plurality of potential customers;
under control of said control system and using said unique identifier, requesting authorization from said customer for said purchase; and
communicating said authorization to said merchant.

2. The method of claim 1 wherein said unique identifier is selected from the group consisting of:
a phone number, a pager number, an e-mail address, and a text messaging address.

3. The method of claim 1 wherein said unique identifier comprises:
a PIN selected by said customer that is associated with a device to contact said customer.

4. The method of claim 1 wherein said requesting comprises:
receiving a communication from said customer; and
confirming that said customer matches said unique identifier.

5. The method of claim 4 wherein said communication from said customer identifies a method of payment.

6. The method of claim 5 wherein said method of payment is selected from the group consisting of:
a credit card, a debit card, and a stored value card.

7. The method of claim 1 wherein said merchant communicates said unique identifier together with said data pertaining to said purchase to a control system.

8. The method of claim 1 wherein said control system communicates said authorization to said merchant.

9. The method of claim 4 wherein a method of payment is associated with said unique identifier.

10. The method of claim 4 further comprising:
receiving a gratuity amount from said customer.

11. The method of claim 4 wherein said communication is selected from the group consisting of:
a phone call, a pager message, an e-mail message, and a text message.

12. The method of claim 1 wherein said requesting comprises:
under control of said merchant, placing said customer in contact with said control system.

13. The method of claim 1 wherein said obtaining from a customer a unique identifier and said requesting from said customer authorization are performed over independent communication channels.

14. The method of claim 13 wherein at least one of said communication channels is a cellular telephone connection.

15. The method of claim 1 wherein said purchase is made remotely.

16. The method of claim 1 wherein said purchase is delivered to said customer.

17. The method of claim 1 wherein said requesting occurs after said purchase is delivered to said customer.

18. The method of claim 1 further comprising:
under control of said control system and upon receipt of said unique identifier, associating said unique identifier with any loyalty or reward programs relevant to said purchase.

19. A method for pre-authorization of payment for a purchase by a user, said method comprising:
selecting a location identifier corresponding to a point of sale where a purchase is to be made;
transmitting said selected location identifier to a system common to a plurality of points of sale;
entering in said system a unique identifier associated with said user; and
under control of said system and upon receipt of said unique identifier and said selected location identifier, requesting authorization for payment in advance of said purchase.

20. The method of claim 19 further comprising:
in response to said authorization for payment, transmitting said authorization to a location where said purchase is to be made.

21. The method of claim 19 further comprising:
entering in said system a gratuity to be added to the amount of said purchase.

22. The method of claim 21 wherein said gratuity is entered as a percentage.

23. The method of claim 21 wherein said gratuity is entered as a dollar amount.

24. The method of claim 19 wherein the amount of said purchase is not known at the time of said transmitting.

25. The method of claim 19 wherein said authorization includes authorizing said purchase to be made by a person other than said user.

26. The method of claim 19 further comprising:
under control of said system and upon receipt of said authorization, querying said user about needs for associated goods and services.

27. The method of claim 26 wherein said associated goods and services are selected from the group consisting of:
maps, location information, reservations, discounts, coupons, dining services, and entertainment.

28. The method of claim 26 wherein said associated goods and services comprise:
providing information about said user's contacts that have made a similar purchase.

29. The method of claim 19 further comprising:
requesting delivery of said purchase to a specified location.

30. The method of claim 19 wherein said authorization of payment expires after a specified period of time if said purchase has not been completed.

31. A system for completing purchases when a customer is not at a point of sale, said system comprising:
means for communicating to a merchant a unique identification associated with a communication device of a customer placing an order for merchandise;
means for communicating said unique identification together with data pertaining to said order for merchandise to a system serving a plurality of merchants and a plurality of customers; and
means controlled by said system for obtaining acceptance for the purchase of said merchandise from said customer identified by said unique identification.

32. The system of claim 31 further comprising:
means for communicating said obtained acceptance to said merchant.

33. The system of claim 31 wherein said obtaining means comprises:
a temporarily established connection from said system to said customer.

34. The system of claim 31 wherein said communicating said unique identification and said obtaining acceptance for said purchase occur simultaneously.

35. A system for completing purchases when a customer is remote from a merchant, said system comprising:
means for communicating to said merchant a unique identification associated with a communication device of said customer placing an order for merchandise;
means for communicating said unique identification together with data pertaining to said order for merchandise to a system serving a plurality of merchants and a plurality of customers; and
means controlled by said system for obtaining acceptance of payment for said merchandise from said customer identified by said unique identification.

36. The system of claim 35 further comprising:
means for communicating said obtained acceptance to said merchant.

37. The system of claim 35 wherein said obtaining means comprises:
a temporarily established connection from said system to said customer.

38. The system of claim 37 wherein said obtaining means further comprises:
a SMS message delivered to a cellular telephone of said customer.

39. The system of claim 38 wherein said SMS message gives said customer the option to accept or reject payment for said purchase.

40. The system of claim 39 wherein said SMS message allows said customer to enter a gratuity when said purchase is accepted.

41. The system of claim 37 wherein said temporarily established connection is a cellular connection.

42. The system of claim 35 wherein a communication occurring over said means for communication to a merchant occurs over the same communication connection in which said order for merchandise is placed with said merchant.

43. A system for completing a purchase when a customer is not at a point of sale, said system comprising:
a communication device for transmitting to a merchant an identifier uniquely associated with a customer placing an order for merchandise;
a system for receiving said identifier and data pertaining to said order for merchandise from said merchant; and
a connection controlled by said system for making contact with said customer and obtaining acceptance of payment for said purchase of said merchandise from said customer.

44. The system of claim 43 wherein said communication device is selected from the group consisting of:
cellular phone, pager, PDA, e-mail, and text messaging device.

45. The system of claim 43 wherein said unique identifier is selected from the group consisting of:
a phone number, a pager number, an e-mail address, and a text messaging address.

46. The system of claim 43 wherein said system for receiving said identifier serves a plurality of merchants and a plurality of customers.

47. A system for pre-authorizing payment for a purchase by a customer, said system comprising:
a communication device for sending a location identifier and a unique identifier;
a system serving a plurality of merchants and a plurality of customers for receiving said location identifier and said unique identifier;
a communication connection between said system and said customer for requesting authorization of payment in advance of said purchase; and
a communication connection between said system and a location associated with said location identifier for transmitting said authorization of payment to said location where said purchase is to be made.

48. A method for making a purchase, said method comprising:
during a purchasing process, communicating an identifier associated with a user together with data pertaining to said purchase to a control system common to a plurality of merchants and to a plurality of potential users;
under control of said control system and using said unique identifier, obtaining authorization for payment of an amount due from said user for said purchase; and
transmitting said amount due to said merchant as payment for said purchase.

49. The method of claim 48 further comprising:
sending a receipt to said merchant identifying said amount due has been transmitted.

50. The method of claim 48 wherein said merchant contacts said system to confirm receipt of said amount due.

51. The method of claim 48 wherein said user authorizes said payment by entering a PIN.
